# EUROPEAN PATENT SPECIFICATION

(11) **EP 0 902 795 B1**
(45) Date of publication and mention of the grant of the patent: **04.12.2002**
(21) Application number: 97923265.9
(22) Date of filing: 05.06.1997
(51) Int. Cl.: C08F 8/00, B01J 20/26, C02F 1/68

(54) **METHOD AND PRODUCTS TO ABSORB OIL AND ORGANIC SOLVENTS FROM WATER AND FROM SEA**
VERFAHREN UND PRODUKTE ZUR ABSORPTION VON ÖL UND ORGANISCHEN LÖSUNGSMITTELN AUS WASSER UND MEERWASSER
PROCEDE ET PRODUITS D'ABSORPTION D'HUILE ET DE SOLVANTS ORGANIQUES A PARTIR D'EAU ET DE LA MER

(30) Priority: 05.06.1996 GR 96100185
(43) Date of publication of application: 24.03.1999
(73) Proprietor: Innoval Management Limited, Curaçao, Netherlands Antilles (AN)
(72) Inventor: VALKANAS, George N., 151 32 Maroussi (GR); KOSTANTAKOPOULOS, Ioannis, 175 63 P. Faliro (GR)
(74) Representative: Kilimiris, Tassos-Anastase
(86) International application number: PCT/GR97/00018
(87) International publication number: WO 97/046595

(56) References cited:
- EP-A- 0 007 792
- EP-A- 0 152 780
- EP-A- 0 153 732
- EP-A- 0 314 449
- EP-A- 0 455 143
- EP-A- 0 471 999
- EP-A- 0 475 578
- EP-A- 0 518 336
- WO-A-94/05724

## Description

The release of organic solvents and of oil into the environment and in water basins leads to disasters, and the consequences of these accidents are the destruction of the environment and of the chains of life.

A most critical problem is created by the release of oil during the sea transportation because of sea accidents. Another critical problem directly connected with life is the pollution in sea ports and in enclosed seas around main cities.

Such pollution loads are also formed in navigable rivers and in lakes by rejection of petroleum and oil, and also during pumping of petroleum. Heavy pollution problems are created.

The handling of those environmental problems is up to date unsuccessful, or incorrect. Detergents are used to emulsify the suspended petroleum and oils to form seabed sludge. In the Mediterranean sea with intense petroleum transportation traffic, the pollution loading has become 0.3-0.8 g/liter and the seabed sludge formed exceeds the 1814369.5 hg/km³ (2.000 tons/ km³) which makes a World maximum.

We have dealt in long lasting R & D work with that problem and have developed a solution by which those water and sea pollution accidents are successfully faced because our solution is based upon the absorption of the petroleum and of oils from sea and water surfaces and thus leads to their useful recycling.

EP-A-0 518 336 describes a method for removing organic liquid contaminants from water or soil by means of thermoplastic elastomeric diblock or triblock copolymers comprising at least one of a monovinyl aromatic block joined to an elastomeric conjugated diene polymer block, and a monovinyl aromatic polymer block joined to an elastomeric monoolefinic polymer block; said block copolymer can be coated with minor amounts of hydrophobic silica providing an improved oil pickup.
EP-A-0 152 780 describes a method for increasing the porosity of a cross-linked co-polymer composed essentially of monovinyl aromatic compounds, polyvinyl aromatic compounds and aliphatic vinyl compounds by treatment of said copolymer with a Lewis acid catalyst in an organic solvent. The products thus obtained are useful as adsorbents for organic compounds present in water and as matrix materials for ion exchange resins or chelate resins.
EP 0 007 792 A2, describes polymeric materials in macroreticular form which are obtained by swelling certain slightly cross-linked polymers in an inert organic solvent (such as chlorinated hydrocarbons) and then cross-linking these polymers in the presence of a Friedel-Crafts type acid catalyst with *inter alia* polyfunctional alkylating agents such as polyhalides. The purposes for which these materials can be used are mainly as ion exchange resins and as catalysts.

We have developed, constructed and proved in practice polymers multiprocessed to become macroreticular, which absorb petroleum, oil and organic solvents in quantity 30 to 60 times their weight molecularly enclosed. With external absorption adherence more quantities are absorbed so that totally are collected large quantities of released petroleum and oils. The absorption products are loaded into a net which is suspended in the water surface and operates like a broom absorbing the pollution loads which are transported in tanks where those are washed with petroleum and are collected as useful fuel.

As absorbing products are used macroreticular polymeric products that absorb petroleum oil and organic solvents molecularly enclosed or externally adhered which can be prepared by cross-linking polymers or co-polymers of styrene with 1,4-dichloromethyl-2,5-dimethylbenzene (DCMDBM) in a chlorinated hydrocarbon solvent in the presence of titanium terachloride (TiCl₄) as cross-linking catalyst.

As polymers to be cross-linked there can be used polystyrene (PS), the copolymer of styrene, ethylene, butadiene and styrene (SEBS) or the elastomeric styrene butadiene rubber (SBR) with 10%, 20% or 40% styrene, completely hydrogenated.

The cross-linking is advanced in solutions containing 20-25% by weight of those polymers in chlorinated hydrocarbon solvents such as dichloroethane. The cross-linking agent is 1,4-dichloromethyl-2,5-dimethylbenzene (DCMDMB) and the catalyst is used titanium tetrachloride (TiCl4) in 10% solution in dichloroethane.

The appearance of thickness, that is the cross-linking result, is related to the action of the catalyst which is added, however, in small quantities in drops and is effective in high solution volumes.

After cross-linking the polymers form of a thick mass which can be cut to pieces and purified and deodorised by heating up to 170°C under vacuum and under stirring.

The absorbing polymers are brought in a net which is suspended on the surface of a water or the sea for sweeping oily matters from said surface.

The absorbing polymers, having absorbed the pollution loads, are brought to a tank and washed with petroleum to collect the absorbed matter as fuel and to recycle the net with the absorbing polymers for re-use.

The following Tables illustrate the reaction of cross-linking agent to the polymer SEBS in weight ratio at 60°C. To determine the absorption capacity the porosity is studied which was found to be low up to 4% of cross-linking agent and then to increase.

**TABLE**

| DCMDMB,% SEBS,resulted porosity | |
|---|---|
| | (cm3/g ) |
| 1 | 0.294 |
| 2 | 0.204 |
| 4 | 0.279 |
| 16 | 0.319 |
| 32 | 0.477 |

It was then studied the absorption capacity of organic solvents selected from market products, derived from petroleum.

| Absorption of Toluene in water- PS | |
|---|---|
| C initial PPM | C finalPPM |
| 413,9 | 0.68 |
| 102,1 | 0.59 |
| 363,3 | 0.78 |

| Absorption of Toluene Water-SEBS | |
|---|---|
| 410,4 | 0.4 |
| 319.6 | 0.39 |
| 119.9 | 0.37 |

| Absorption of 1,2-Dichloroethane - Water , SEBS | |
|---|---|
| 692,2 | 0.4 |
| 202,7 | 0.56 |

| Absorption of Decane-water, SEBS | |
|---|---|
| 456,2 | 0.35 |
| 623,4 | 0.37 |

| Absorption of Petrol-water ,SEBS | |
|---|---|
| 653,4 | 0.36 |
| 638,2 | 0.34 |

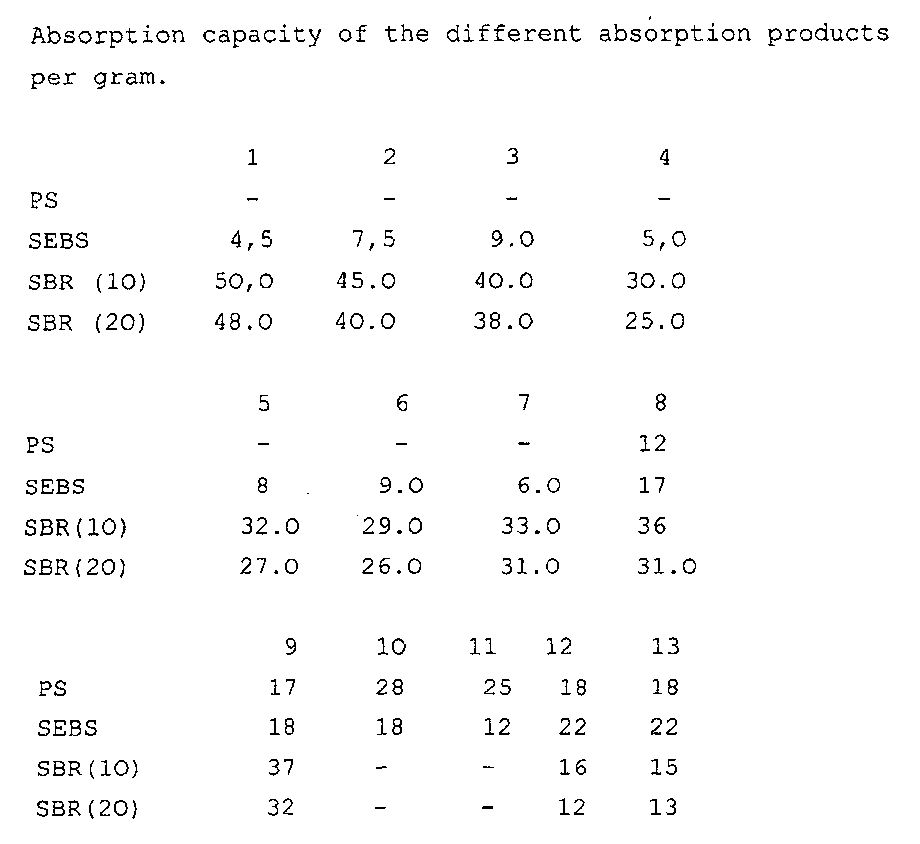

1 n-pentane, 2 n-hexane , 3 n-octane , 4 isooctane, 5 n-nonane, 6 n-decane 7 n-dodecane , 8 benzene, 9 toluene, 10 chloroform, 11 carbon tetrachloride, 12 1,2 dichloroethane, 13 1,1,3 trichloroethane .

The above results are successful and very useful. We have studied the absorption capacity on oil surface pollution in harbours and the absorption capacity in sea. For these trials the absorption polymers were placed in a polypropylene net in composition 20% PS, 30% SEBS, 30% SBR (10) and 20%$ SBR (20) and the results obtained were very impressive. It was proved that the sweeping was not only due to molecular enclosed absorption but also due to external absorption adherence so that the collection of oily matter was effective. That load of oil matter is brought in a tank and is washed with petroleum by which all those oils are collected as useful fuels. Thus this sweeping makes the pollution loads useful, the harbours and the sea are liberated from oily and dirty matter and the ecology is overall improved.

### EXAMPLE 1

In a reactor of 0.5 m³ capacity is fed dichloroethane 200 liter and added the polymer SEBS 20 kg. and in the solution is added 1,4-dichloromethyl -2,5-dimethylbenzene 100 gms and at 60°C is added the catalyst TiCl4 as 10% solution. After agitation for 40 minutes the cross-linking started and the solution becomes viscous and thick and cannot be agitated further. The product is taken off and is cut in a mincing machine and then is brought to a reactor for purification to become commercial product. That reactor is heated up to 170°C under vacuum and stirring so that all the solvent is taken off and the polymeric product is completely deodorised.

Under the same conditions is treated the Polystyrene and the SBR 10%, 20% and 40% in Styrene fully hydrogenated to saturation with the addition of the crosslinking agent in 2% in all, calculated on the benzene rings present.

### EXAMPLE 2

Products of example 1 in composition quantities Polystryrene 30% , cross-linked SEBS 30% , cross-linked SBR 10% in Styrene ,fully hydrogenated to saturation 20% and SBR 20% in Styrene fully hydrogenated to saturation 20%, are brought on a polypropylene net and are swept along on harbour surface. By sweeping the surface all oily matter is collected in quantity 20% molecularly enclosed and in quantity 80% adhered externally. The net with the polymers loaded is brought to a tank and washed with petroleum, the oily matter is recycled as fuel and the absorption polymers are used again.

### EXAMPLE 3

Products of example 1 in composition quantities 10% crosslinked Polystyrene , 30% crosslinked SEBS , 40% crosslinked SBR ,10% in Styrene fully hydrogenated to saturation, are brought to sweep a sea surface pollution. The oil surface swept was that apart of the main oxidised petroleum mass which is collected otherwise. The materials of the net being drawn by a boat swept successfully the sea surface. All the oily water was collected and the net was brought to a tank washing the net with petroleum to receive the absorbed oily matter which was recycled as fuel and the sea and the sea bottom pollution is avoided.

### EXAMPLE 4

In a lake where is released petroleum and organic solvents from transportation and from drilling wells, was brought the net of example 3 being drawn by a boat and it swept the surface. The oily matter swept was by 25% molecularly enclosed and by 75% externally absorbed-adhered. It was brought in a tank and washed with petroleum to collect the oily matter absorbed as fuel and the net with the absorbing polymers was recycled to use.

### EXAMPLE 5

The net of example 4 is placed at the flow of a river, the water of which contains oily matter. The action on the river was to collect all suspended oily matter and the water flow is established with natural pure water flow.

## Claims

1. Method for producing macroreticular polymeric products that absorb petroleum, oil and organic solvents molecularly enclosed or externally adhered, by cross-linking polymers or co-polymers of styrene with 1,4-dichloromethyl-2,5-dimethylbenzene (DCMDMB) in a chlorinated hydrocarbon solvent in the presence of titanium tetrachloride (TiCl₄) as cross-linking catalyst.

2. Method according to claim 1 in which the polymer to be cross-linked is polystyrene (PS), the copolymer of styrene, ethylene, butadiene and styrene (SEBS) or the elastomeric styrene butadiene rubber (SBR) with 10%, 20% or 40% styrene, completely hydrogenated.

3. Method according to claim 1 or claim 2 in which after cross-linking the polymers form a thick mass which is cut to pieces and purified and deodorized by heating up to 170°C under vacuum and under stirring.

4. Use of absorbing polymers obtainable according to any one of claims 1 to 3 for absorbing petroleum, oil and organic solvents.

5. Use according to claim 4 in which the absorbing polymers are brought in a net which is suspended on the surface of a water or the sea for sweeping oily matters from said surface.

6. Use according to claim 5 wherein the absorbing polymers, having absorbed the pollution loads, are brought to a tank and washed with petroleum to collect the absorbed matter as fuel and to recycle the net with the absorbing polymers for re-use.

7. Absorbing polymers obtainable according to any one of claims 1 to 3.

## Revendications

1. Procédé pour la production de produits polymérisés macro-réticulalires qui absorbent le pétrole, l'huile et les solvants organiques inclus sous la forme de molécules ou adhérents à partir de l'extérieur, comprenant la réticulation de polymères ou de copolymères de styrène avec le 1,4-dichlorométhyl-2,5-diméthylbenzène (DCMDMB) dans un solvant à base d'hydrocarbures chlorés en présence de tétrachlorure de titane (TiCl₄) comme catalyseur de réticulation.

2. Procédé selon la revendication 1, dans lequel le polymère à réticuler est le polystyrène (PS), le copolymère de styrène, l'éthylène, le butadiène et le styrène (SEBS) ou le caoutchouc butadiène-styrène (SBR) élastomère ayant 10 %, 20 % ou 40 % de styrène, complètement hydrogéné.

3. Procédé selon la revendication 1 ou 2, dans lequel, après réticulation, les polymères forment une épaisse masse qui est finement réduite et purifiée et désodorisée en la chauffant à 170°C sous vide et sous agitation.

4. Utilisation des polymères absorbants pouvant être obtenus selon l'une quelconque des revendications 1 à 3, pour absorber le pétrole, l'huile et les solvants organiques.

5. Utilisation selon la revendication 4, dans laquelle les polymères absorbants sont apportés dans un filet qui est suspendu à la surface d'une eau ou de la mer pour balayer les matières huileuses de ladite surface.

6. Utilisation selon la revendication 5, dans laquelle les polymères absorbants, ayant absorbé les charges de pollution, sont apportés à un bac et lavés avec du pétrole pour recueillir la matière absorbée sous la forme de combustible et pour recycler le filet avec les polymères absorbants en vue d'une ré-utilisation.

7. Polymères absorbants pouvant être obtenus selon l'une quelconque des revendications 1 à 3.

## Patentansprüche

1. Verfahren zur Herstellung von makroretikulären polymeren Produkten, die Erdöl, Öl und organische Lösungsmittel molekular eingeschlossen oder äußerlich anhaftend absorbieren, durch Vernetzung von Polymeren oder Copolymeren von Styrol mit 1,4-Dichlormethyl-2,5-dimethylbenzol (DCMDMB) in einem chlorierten Kohlenwasserstoff-Lösungsmittel in Gegenwart von Titantetrachlorid (TiCl₄) als Vernetzungskatalysator.

2. Verfahren nach Anspruch 1, wobei das zu vernetzende Polymer Polystyrol (PS), das Copolymer aus Styrol, Ethylen, Butadien und Styrol (SEBS) oder der elastomere Styrol-Budadien-Kautschuk (SBR) mit 10 %, 20 % oder 40 % Styrol, vollständig hydriert, ist.

3. Verfahren nach Anspruch 1 oder Anspruch 2, wobei die Polymere nach der Vernetzung eine dicke Masse bilden, die in Stücke geschnitten wird und gereinigt und desodoriert wird, indem sie unter Vakuum und unter Rühren auf 170°C erwärmt wird.

4. Verwendung von absorbierenden Polymeren, die nach einem der Ansprüche 1 bis 3 erhältlich sind, zum Absorbieren von Erdöl, Öl und organischen Lösungsmitteln.

5. Verwendung nach Anspruch 4, wobei die absorbierenden Polymere in ein Netz eingebracht werden, das an der Oberfläche von Wasser oder des Meeres aufgehängt ist, zum Reinigen dieser Oberfläche von öligen Materialien.

6. Verwendung nach Anspruch 5, wobei die absorbierenden Polymere, die die Verschmutzungsbeladung absorbiert haben, in einen Tank gebracht werden und mit Erdöl gewaschen werden, um das absorbierte Material als Brennstoff zu sammeln und das Netz mit den absorbierenden Polymeren zur Wiederverwendung zurückzuführen.

7. Absorbierende Polymere, die nach einem der Ansprüche 1 bis 3 erhältlich sind.
